(19) **Europäisches Patentamt / European Patent Office / Office européen des brevets**

(11) **EP 1 324 065 B1**

(12) **FASCICULE DE BREVET EUROPEEN**

(45) Date de publication et mention
de la délivrance du brevet:
**25.05.2011 Bulletin 2011/21**

(51) Int Cl.:
*G01S 3/52* (2006.01)    *G01S 7/02* (2006.01)

(21) Numéro de dépôt: **02102722.2**

(22) Date de dépôt: **11.12.2002**

(54) **Procédé de localisation passive d'une cible et notamment de localisation air-air**

Verfahren zur passiven Lokalisierung eines Zieles und insbesondere zur Luft-Luftlokalisierung

Method for passively finding the position of a target and especially for air-air locating

(84) Etats contractants désignés:
**DE GB IT SE**

(30) Priorité: **14.12.2001 FR 0116239**

(43) Date de publication de la demande:
**02.07.2003 Bulletin 2003/27**

(73) Titulaire: **Thales**
**92200 Neuilly-sur-Seine (FR)**

(72) Inventeur: **Paquelet, Stéphane**
**Thales Intellectual Property**
**94117 CX, ARCUEIL (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 5 774 087    US-A- 6 163 297**

**EP 1 324 065 B1**

**Description**

La présente invention concerne un procédé de localisation passive d'une cible, par un système de surveillance mobile, par exemple un aéronef, portant des capteurs. L'invention s'applique notamment à la localisation de cibles dont la fréquence du signal d'émission est variable.

Les procédés de localisation passive d'une cible usuellement utilisés sont basés notamment sur l'exploitation de l'effet Doppler. Ce type de procédé dont un exemple de mise en oeuvre est notamment décrit dans le document US 6163927 délivré le 19/12/2000 à la société Litton Systems Inc., n'est vraiment utilisable que si la fréquence d'émission de la cible est fixe. Dans le cas contraire, les variations de la fréquence d'émission ne permettent pas de déterminer de manière simple la fréquence doppler.

Sur les aéronefs actuels les systèmes d'émission radar à fréquence variable tendent à se généraliser et l'emploi de procédés basés sur la détermination de la fréquence doppler n'est donc plus efficace.

Un but de l'invention est notamment d'effectuer la localisation passive d'une cible dont la fréquence d'émission n'est pas nécessairement fixe, mais peut être variable.

A cet effet l'invention a pour objet un procédé de localisation d'une cible par mesure interférométrique sur le signal reçu de la cible. Le signal émis par la cible fait l'objet d'une acquisition par des moyens de détection disposés sur un porteur. Le procédé de localisation d'une cible comporte au moins deux étapes.

La première étape est une étape d'acquisition de mesures qui comporte au moins deux séquences indépendantes d'acquisition du signal émis par la cible. A chaque séquence le porteur suit une trajectoire distincte, les trajectoires faisant entre elles un angle non nul. Ces séquences d'acquisition permettent d'obtenir des séries de mesures indépendantes.

La deuxième étape est une étape de traitement des mesures mettant en oeuvre un traitement statistique. Ce traitement est effectué sur chaque série de mesure et permet la détermination des paramètres caractérisant la cible, notamment les paramètres de vitesse et de distance.

L'invention a notamment pour avantage de permettre une estimation des paramètres de la cible, sans nécessiter de la part de la cible une émission à fréquence fixe.

L'estimation des paramètres cible présente l'avantage d'être réalisée à partir d'un nombre limité de mesures.

Avantageusement l'utilisation d'un repère de coordonnées sphériques permet de simplifier l'expression du modèle théorique utilisé, ce qui facilite l'estimation des paramètres cible.

Le traitement mis en oeuvre par le procédé selon l'invention est itératif. Il permet avantageusement d'estimer précisément les paramètres de la cible par des affinages successifs.

D'autres caractéristiques et avantages de l'invention apparaîtront à l'aide de la description qui suit, faite en regard des figures annexées qui représentent :

La figure 1, une illustration de l'étape d'acquisition de mesures.
La figure 2, l'illustration d'une disposition possible des capteurs sur l'avion porteur.
La figure 3, l'illustration du repère géométrique utilisé.
La figure 4, une représentation simultanée des deux repères géométriques.

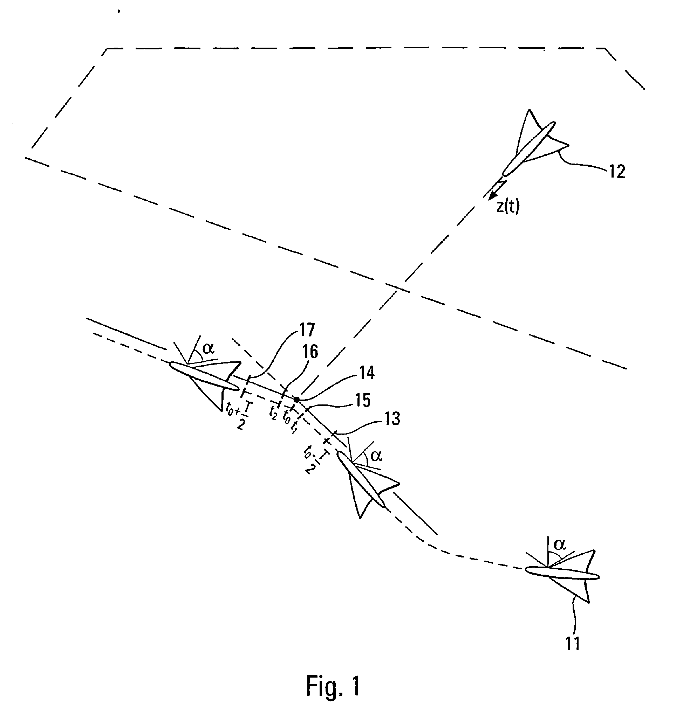

La figure1 illustre le déroulement de l'étape d'acquisition de mesures que comporte le procédé selon l'invention. A un instant quelconque, l'avion porteur 11 détecte un avion cible 12 se déplaçant à une vitesse $v_c$ et émettant un signal radar. Cet avion cible vole avec une altitude et une direction quelconques, à une grande distance de l'avion porteur, par exemple au-delà de 150 km. Après avoir détecté l'avion cible, l'avion porteur modifie sa trajectoire et passe de sa position initiale à la position 13 lui permettant d'engager le procédé selon l'invention. Il effectue alors deux séquences de mesures du signal z(t) reçu de la cible. Ces séquences s'étendent sur deux intervalles de temps $\left[ t_0 - \dfrac{T}{2}, \ t_1 \right]$ et $\left[ t_2, \ t_0 + \dfrac{T}{2} \right]$. Les instants $t_1$ et $t_2$ encadrent l'instant $t_0$ de référence qui correspond au point 14 d'estimation des paramètres cible. Durant chaque séquence le porteur suit une trajectoire avec un vecteur vitesse de préférence constant.

La première séquence conduit, à l'instant $t_1$, le porteur 11 au voisinage du point 15. Le porteur infléchit alors sa trajectoire d'un angle $\alpha$, et entreprend à partir de l'instant $t_2$, la deuxième séquence. Sa trajectoire le conduit du point 16 au point 17.

La valeur de l'angle $\alpha$ est déterminée par l'angle d'ouverture maximum des dispositifs de réception. Elle dépend également des capacités de l'avion porteur à changer de cap étant donné sa vitesse. Une modification de cap de l'ordre de 30˚ est donnée à titre d'exemple.

Selon le procédé, les deux portions de trajectoire correspondant aux deux séquences sont effectuées chacune avec un vecteur vitesse constant. L'une d'entre elles est choisie de préférence perpendiculaire à la direction moyenne de propagation du signal émis par la cible.

La position relative initiale des deux avions 11 et 12 détermine l'ordre chronologique des trajectoires. Cet ordre est indifférent pour la mise en oeuvre de l'étape de traitement du procédé selon l'invention, qui suit l'étape d'acquisition. Dans le but de gagner du temps, l'avion porteur cherche par exemple à rallier en premier la trajectoire la plus proche de sa trajectoire initiale.

Avantageusement, pour déterminer les paramètres de la cible, le procédé selon l'invention ne nécessite pas un très grand nombre de résultats de mesures. Les portions de trajectoires définies précédemment ont donc une longueur faible relativement à la distance cible - porteur et à la vitesse du porteur, par exemple respectivement 150 km et 250 m/s. Ceci permet de considérer la trajectoire de la cible comme constante pendant les mesures.

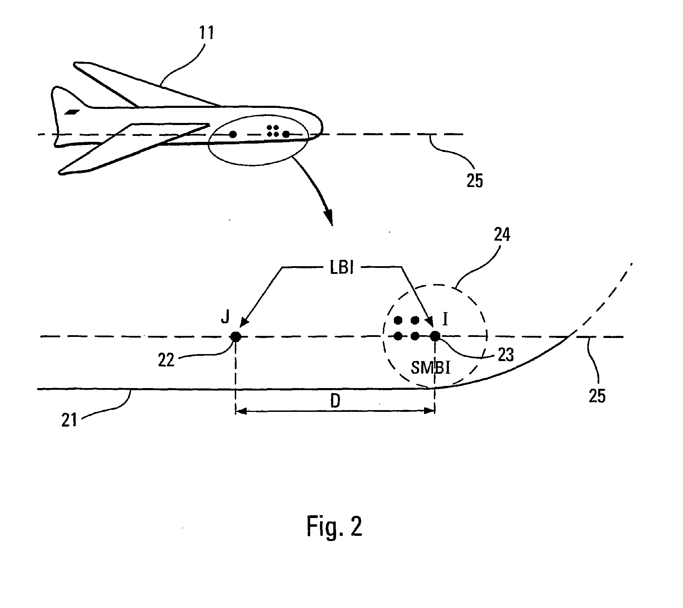

La figure 2 représente un mode de répartition possible des capteurs sur l'avion porteur. Les n capteurs sont disposés par exemple en deux groupes latéralement le long du fuselage 21.

Le premier groupe est constitué de deux capteurs 22 et 23 positionnés en deux points I et J selon l'axe longitudinal 25 du porteur. On appelle O le milieu du segment IJ. Ces deux capteurs sont distants l'un de l'autre d'une longueur D très supérieure à la longueur d'onde du signal reçu. L'espacement des capteurs peut par exemple atteindre 4 mètres. Ces deux capteurs sont indépendants : la phase relative de leurs antennes présente une erreur de calibration qui peut être modélisée par un signal lentement variable. Ils forment la grande base interférométrique ou "LBI" (Large Base Interferometer) ou plus simplement "grande base".

Le second groupe est constitué par d'autres capteurs disposés dans un voisinage 24, dont le rayon est de l'ordre du mètre. Ces capteurs sont très rapprochés les uns des autres et les antennes qui les composent sont calibrées en phase. Certains de ces capteurs sont positionnés sur un axe parallèle à l'axe du fuselage 25 et d'autres de part et d'autre de cet axe.

Ce groupe de capteurs forme la petite base interférométrique ou "SMBI" (SMall Base Interferometer) ou plus simplement "petite base".

Avantageusement, l'un des capteurs qui composent la grande base entre également dans la composition de la petite base. Ceci permet de limiter le nombre de capteurs mis en jeu.

Chaque groupe de capteurs agit comme un interféromètre indépendant et fournit des données relatives à la différence de phase des signaux z(t) reçus sur ses capteurs. Le porteur recueille ainsi une information de phase liée aux mesures de la grande base interférométrique et une information de phase liée aux mesures de la petite base.

Le signal z(t) émis par la cible et reçu par chaque capteur du porteur est un signal radar de fréquence $f_0$. Sous forme complexe, son expression temporelle est modélisée par la relation suivante :

$$z(t) = s(t)\, e^{2i\pi f_0 t} + w(t) \qquad (1)$$

Dans cette relation s(t) est un signal en bande $\Delta F$, avec $\Delta F$ de l'ordre du mégahertz par exemple et w(t) un bruit thermique considéré comme un bruit blanc gaussien.

Des calculs menés par ailleurs montrent que, le rapport signal reçu à bruit étant considéré comme très supérieur à 1, égal par exemple à +20 dB, on peut écrire :

$$(2)\ \begin{cases} |z(t)| \approx A(t) + \Re(w(t)) \\ \arg(z(t)) \approx \varphi(t) + 2\pi f_0 t + \Im(w(t)) \end{cases}$$

A(t) est une fonction de l'amplitude du signal émis et $\varphi(t)$ une fonction de la direction du signal reçu et de la phase de $s(t)$.

$\Re(w(t))\ et\ \Im(w(t))$ représentent la partie réelle et la partie imaginaire de w(t).

Dans l'expression de z(t) le terme d'amplitude $|z(t)|$ n'est pas directement explicitable en fonction des paramètres cible. En revanche le terme de phase arg(z(t)) contient de manière exploitable l'information relative à la localisation de la cible. De plus, ce terme est accessible au travers des mesures effectuées par les capteurs implantés sur l'avion porteur. Le procédé selon l'invention exploite donc ce terme de phase.

L'ensemble des capteurs constituant la petite base permet d'obtenir, à différents instants t, la direction d'arrivée $\vec{\gamma}(t)$ du signal, en site et gisement.

Les deux capteurs I et J constituant la grande base fournissent quant à eux, une information $\Delta\Phi_t^{LBI}$ égale à la différence de phase des signaux reçus par chaque capteur. Si on ne tient pas compte du bruit, $\Delta\Phi_t^{LBI}$ peut s'écrire comme suit :

$$\Delta\Phi^{LBI}(t) = (\Phi_J - \Phi_I)(t)$$
$$= 2\pi\frac{f_t}{c}(d_1(t) - d_2(t)) + \underbrace{\varphi_2(f_t) - \varphi_1(f_t)}_{\delta\varphi(f_t)} \quad \text{modulo } 2\pi \quad (3)$$

avec :

- $f_t$ fréquence centrale du signal cible à l'instant t,
- $d_1(t)$ *et* $d_2(t)$ la distance de chacun des capteurs à la source d'émission de la cible,
- $\delta\varphi(f_t)$ un terme inconnu, lié à un retard non maîtrisé entre les deux antennes qui ne sont pas calibrées.

L'expression "modulo $2\pi$" traduit le fait que, la distance D entre les capteurs I et J étant grande, le déphasage $\Delta\Phi^{LBI}(t)$ n'est connu qu'à $n\times2\pi$ près.

En supposant que la fréquence centrale du radar varie peu entre deux impulsions, on peut assimiler le signal émis à un signal à bande étroite, au moins pendant le temps nécessaire à une mesure. Dans ce cas $\varphi_1(f_t)$ *et* $\varphi_2(f_t)$ présentent des variations négligeables en fonction du temps. On peut alors avantageusement substituer à $\Delta\Phi_t^{LBI}$ l'expression $\Delta^2\Phi^{LBI}(t) = \Delta\Phi^{LBI}(t) - \Delta\Phi^{LBI}(t_0)$ de la variation de $\Delta\Phi^{LBI}(t)$ entre $t_0$ et t. De cette façon on s'affranchit de $\delta\varphi(f_t)$.

Les grandeurs $\gamma(t)$ *et* $\Delta^2\Phi^{LBI}(t)$ sont des fonctions continues de t. En revanche, le procédé selon l'invention utilise, pour déterminer les paramètres de la cible, des séries de valeurs de $\gamma(t)$ *et* $\Delta^2\Phi^{LBI}(t)$ mesurées à des instants $t_n$ pris à des intervalles de temps réguliers $\Delta T$ dans chacun des intervalles $\left[t_0 - \frac{T}{2}, \; t_1\right]$ et $\left[t_2, \; t_0 + \frac{T}{2}\right]$. Un instant $t_n$ considéré pourra par exemple prendre la valeur $t_n = t_1 - n.\Delta T$ sur l'intervalle $\left[t_0 - \frac{T}{2}, \; t_1\right]$.

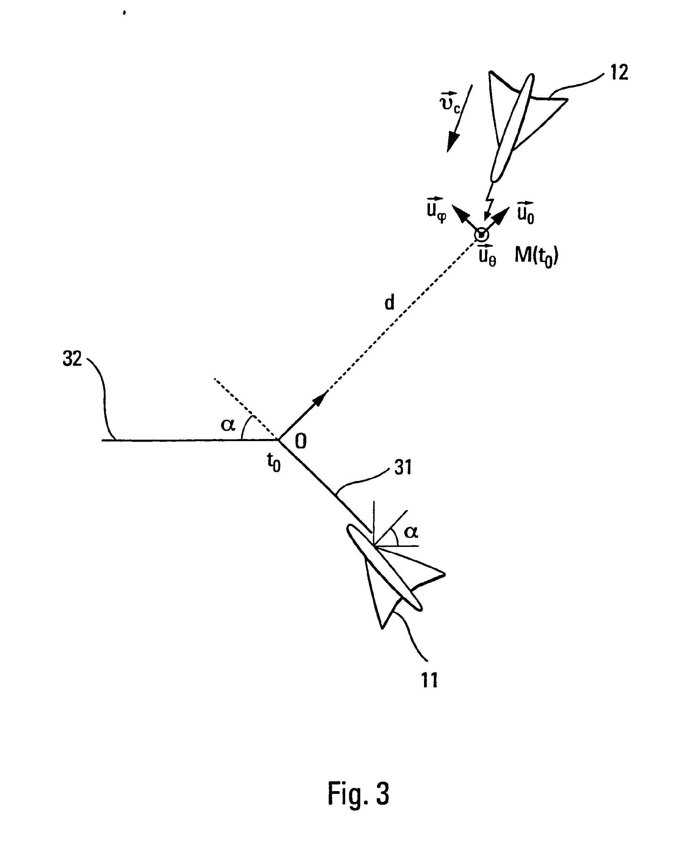

La figure 3 illustre le système d'axes utilisé pour définir le procédé selon l'invention. Dans ce système d'axes l'avion cible 12 est repéré par ses coordonnées sphériques dans le trièdre direct $[\vec{u}_0, \vec{u}_\theta, \vec{u}_\varphi$ où $\vec{u}_0$ représente la direction à l'instant $t_0$, du porteur 11 à la cible 12.

Selon l'invention, la trajectoire d'observation de l'avion porteur est idéalement décomposée en deux segments 31 et 32 de trajectoires qui sont assimilables à des segments de droites correspondant à deux intervalles de temps $I_1 = \left[-\frac{T}{2}, t_1\right]$ et $I_2 = \left[t_2, \frac{T}{2}\right]$. L'intervalle $[t_1, t_2]$ contient l'instant $t_0$ pour lequel on cherche à estimer les paramètres de la cible.

Pour permettre une estimation optimale, comme il a été dit précédemment, un de ces segments, figuré par le segment 32 sur la figure, suit la direction $\vec{u}_\varphi$ sensiblement perpendiculaire à la direction moyenne $\vec{u}_0$ de propagation du signal émis par la cible.

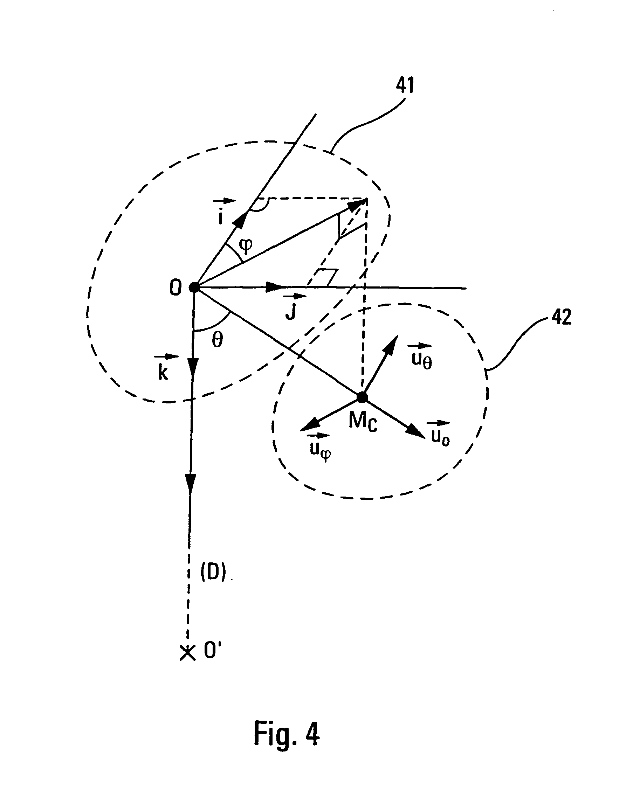

La figure 4 illustre le passage d'un repère normal terrestre 41, de coordonnées cartésiennes, à un repère local de coordonnées sphériques 42. Le repère normal terrestre 41 est défini, par exemple, par son origine O, point milieu de la grande base, et par la droite D passant par O et orthogonale à la surface de la Terre. O' est le point d'intersection de la droite D avec la surface de la Terre. Le trièdre direct $\{\vec{i},\vec{j},\vec{k}\}$ lié à ce repère est par exemple défini comme suit :

- $\vec{k}$ est le vecteur porté par D et dirigé vers le bas
- $\vec{i}$ et $\vec{j}$ sont deux vecteurs orthogonaux, situés dans le plan parallèle au plan horizontal, tangent à la terre en O'. Le vecteur $\vec{i}$ a pour direction le nord et le vecteur $\vec{j}$ l'est.

Le repère local 42, quant à lui, est construit sur le trièdre $\left\{\vec{u}_0,\vec{u}_\theta,\vec{u}_\varphi\right\}$ défini par:

- $$\vec{u}_0 = \sin\theta\cos\varphi\;\vec{i} + \sin\theta\sin\varphi\;\vec{j} + \cos\theta\;\vec{k} \qquad \vec{u}_\theta = \cos\theta\cos\varphi\;\vec{i} + \cos\theta\sin\varphi\;\vec{j} - \sin\theta\;\vec{k}$$

$$\vec{u}_\varphi = -\sin\varphi\;\vec{i} + \cos\varphi\;\vec{j}$$

avec $\theta \in\ ]0,\ \pi[$ et $\varphi \in\ [0,\ 2\pi[$.

Dans ce repère un vecteur $\vec{X}$ sera défini par ses trois composantes $X_r$, $X_\theta$, et $X_\phi$.

Selon l'invention, les mesures fournies par les grande et petite bases sont modélisées, dans un premier temps, par les relations suivantes :

$$(4)\begin{cases} \vec{\gamma}_{mes}(t) = \dfrac{\vec{u}_0 + \Delta\vec{u}_t}{\|\vec{u}_0 + \Delta\vec{u}_t\|} + \vec{w}(t) & (5) \\[2em] \Delta^2\Phi^{LBI}(t) = 2\pi\left\{\vec{k}_t\cdot\dfrac{\vec{u}_0 + \Delta\vec{u}_t}{\|\vec{u}_0 + \Delta\vec{u}_t\|} - \vec{k}_0\cdot\vec{u}_0\right\} + w'(t) - w'(t_0) \quad \text{modulo } 2\pi & (6) \end{cases}$$

La relation (5) modélise l'expression des mesures des directions angulaires de l'axe reliant le centre de la grande base du porteur à la cible.
La relation (6) modélise, pour sa part, l'évolution de la différence de phase, mesurée entre les deux capteurs de la grande base.

$\vec{u}_0$ représente, à l'instant $t_0$, la direction de la cible par rapport au centre de la grande base.

$\Delta\vec{u}_t$ représente la variation au cours du temps, de la direction de la cible par rapport au centre de la grande base. Il s'exprime par la relation suivante :

$$\Delta\vec{u}_t = \frac{\vec{v}_c}{d}\cdot(t - t_0) - \frac{\Delta\vec{M}_t}{d}$$

avec :

- $\Delta\vec{M}_t = \overrightarrow{O(t_0)O(t)}$, le vecteur qui correspond au déplacement du porteur pendant l'intervalle de temps $[t_0, t]$,

- d, la distance qui sépare la cible du centre de la grande base à l'instant $t_0$,

- $\vec{v}_c$, le vecteur vitesse de la cible.

Le vecteur $\vec{k}_t = \dfrac{\overrightarrow{IJ(t)}}{\lambda_t}$ caractérise la position des deux capteurs I et J de la grande base. $\vec{k}_t$ est par exemple tiré des informations fournies par la centrale inertielle du porteur. $\lambda_t$ est la longueur d'onde correspondant à la fréquence

centrale $f_t$ du signal émis par la cible, $f_t$ étant déterminée par ailleurs.

Les termes $\vec{w}(t)$ et w' représentent des bruits blancs gaussiens.

Dans ce système (4) les paramètres relatifs à la cible apparaissent au travers des expressions de $\vec{u}_0$ et 1/d pour la position et des expressions $\dfrac{\vec{v}_c}{d}$ pour la vitesse.

L'utilisation d'un repère de coordonnées sphériques tel que celui décrit précédemment, permet de réexprimer les grandeurs $\vec{u}_0$, 1/d et $\dfrac{\vec{v}_c}{d}$, sous la forme d'un vecteur Θ à six composantes qui définissent la vitesse et la position de la cible. Θ a pour expression :

$$\Theta = \left[ \theta, \varphi, \frac{d_0}{d}, \frac{\tau_0 v_r}{d}, \frac{\tau_0 v_\theta}{d}, \frac{\tau_0 v_\varphi}{d} \right] \quad (7)$$

Dans cette expression :

- $v_r$, $v_\theta$ et $v_\varphi$ sont les composantes de la vitesse cible $\vec{v}_c$ dans Le repère de coordonnées sphériques.

- $d_0$ et $\tau_0$ sont des constantes permettant d'exprimer $\dfrac{1}{d}$, $\dfrac{v_r}{d}$, $\dfrac{v_\theta}{d}$ et $\dfrac{v_\varphi}{d}$ comme des nombres sans dimension de l'ordre de l'unité.

Une étude menée par ailleurs montre qu'en fonction du type de mesures effectuées, le porteur se déplaçant dans un plan horizontal, le vecteur $\vec{v}_c$ n'est accessible que par sa composante $v_\varphi$. Les composantes $v_r$ et $v_\theta$ ne sont pas correctement observables même avec une précision moyenne et il s'avère préférable de leur donner une valeur a priori.

La valeur de la composante $v_\theta$ étant faible, celle-ci peut être fixée à zéro.

De plus si on explicite les relations (5) et (6) en fonction des vecteurs $\vec{u}\,\vec{u}_\theta$ et $\vec{u}_\varphi$, la variation de la composante $v_r$ n'apparaît que dans un terme du deuxième ordre et ne représente pas un terme prépondérant. Une forte dispersion sur $v_r$ n'entraîne donc pas une erreur significative sur l'estimation des autres paramètres. On peut donc lui donner une valeur estimative déterminée par rapport au module de la vitesse cible. Pour une vitesse égale à 250 m/s en module, une valeur de $v_r$ comprise 125 m/s et 250m/s, par exemple 175 m/s représente une valeur convenable.

Le modèle (4) peut alors être réécrit de la façon suivante :

$$(8) \begin{cases} \Delta\Phi^{SMBI}(t) = M_\Theta^{SMBI}(t) + w(t) & (9) \\ \Delta^2\Phi^{LBI}(t) = M_\Theta^{LBI}(t) + w'(t) - w'(t_0) & (10) \end{cases}$$

avec :

- $\Delta\Phi^{SMBI}(t) = \vec{u}_\varphi \cdot \vec{\gamma}_{mes}(t)$

$$- \quad M_\Theta^{SMBI}(t) = \vec{u}_\varphi \cdot \frac{\vec{u}_0 + \Delta\vec{u}_t}{\|\vec{u}_0 + \Delta\vec{u}_t\|}$$

$$- \quad M_\Theta^{LBI}(t) = 2\pi \left\{ \vec{k}_t \cdot \frac{\vec{u}_0 + \Delta\vec{u}_t}{\|\vec{u}_0 + \Delta\vec{u}_t\|} - \vec{k}_0 \cdot \vec{u}_0 \right\}$$

Les paramètres $v_r$ et $v_\theta$ étant fixés a priori, l'expression de $\Theta$ se simplifie pour devenir :

$$\Theta = \left[ 0, \varphi, \frac{d_0}{d}, \frac{\tau_0 v_\varphi}{d} \right] \quad (11)$$

De même, les termes selon $\vec{u}_0$ et $\vec{u}_\theta$ considérés comme connus s'intègrent dans l'expression de $\Delta\vec{u}_t$ qui devient :

$$\Delta\vec{u}_t = \left( \frac{v_\varphi}{d} \cdot (t - t_0) - \frac{\Delta M_t^\varphi}{d} \right) \cdot \vec{u}_\varphi + \vec{U}$$

$$- \qquad = \left( \frac{v_\varphi - v_P^\varphi}{d} \cdot (t - t_0) \right) \cdot \vec{u}_\varphi + \vec{U} \qquad (12)$$

Avec :

$$- \quad \Delta M_t^\varphi = \overrightarrow{O(t_0)O(t)} \cdot \vec{u}_\varphi = v_P^\varphi (t - t_0)$$

où $v_P^\varphi$ est la composante suivant $\vec{u}_\varphi$ de la vitesse du porteur.

$$- \quad \vec{U} = \left( \frac{v_r}{d} \cdot (t - t_0) - \frac{\Delta M_t^r}{d} \right) \cdot \vec{u}_0 + \left( \frac{v_\theta}{d} \cdot (t - t_0) - \frac{\Delta M_t^\theta}{d} \right) \cdot \vec{u}_\theta$$

où $v_r$ prend une valeur indicative, et $v_\theta$ une valeur nulle.

Soit $\alpha$ le défilement relatif de la cible devant le porteur selon $\vec{u}_\varphi$. $\alpha$ est défini par :

$$\alpha = \frac{v_\varphi - v_P^\varphi}{d} = \frac{\tau_0 \, v_P^\varphi}{d} - \frac{\tau_0 \, v_P^\varphi}{d_0} \cdot \frac{d_0}{d} \qquad (13)$$

On a alors

$$- \Delta \vec{u}_t = \alpha \cdot \vec{u}_\varphi + \vec{U} \qquad (14)$$

Le modèle (8) s'exprime donc en fonction de $\alpha$ qui est une combinaison linéaire des composantes $\dfrac{d_0}{d}$ et

$\dfrac{\tau_0 v_\varphi}{d}$ du vecteur $\Theta$.

Pour réaliser une estimation des paramètres $\theta$, $\varphi$, $\dfrac{d_0}{d}$ et $\dfrac{\tau_0 v_\varphi}{d}$, le procédé selon l'invention comporte par exemple un traitement qui consiste à rechercher les valeurs de $\theta$, $\varphi$, $\dfrac{d_0}{d}$ et $\dfrac{\tau_0 v_\varphi}{d}$ qui minimisent un critère statistique

C($\Theta$) fonction de $\Theta$. Ce critère statistique qui porte sur l'expression du modèle (8), traduit la vraisemblance par rapport aux mesures de ce modèle d'évolution choisi. Ce critère est de type "moindres carrés". Son expression est la suivante :

$$C(\Theta) \;=\; \frac{\displaystyle\sum_n \left( \Delta\Phi^{SMBI}(t_n) - M_\Theta^{SMBI}(t_n)\right)^2}{2\sigma_{SMBI}^2} -$$

$$\log \int \frac{(\Delta^2\Phi^{LBI}(t_n) - M_\Theta^{LBI}(t_n) + w_0\,[2\pi])}{2\sigma_{LBI}^2} \exp{-\frac{w_0^2}{2\sigma_{LBI}^2}}\, dw_0 \qquad (15)$$

où la variable $t_n$ représente les instants de mesures pris sur les intervalles $\left[ t_0 - \dfrac{T}{2},\; t_1 \right]$ et $\left[ t_2,\; t_0 + \dfrac{T}{2} \right]$. Cette expression du critère C($\Theta$) est donnée à titre indicatif, sachant qu'une modélisation plus fine du bruit pourrait conduire à une expression différente.

La recherche des valeurs de $\theta$, $\varphi$, $\dfrac{d_0}{d}$ et $\dfrac{\tau_0 v_\varphi}{d}$ qui donnent une valeur minimum à C($\Theta$), doit en principe être faite par exploration exhaustive et large. Avec quatre paramètres cette recherche implique un nombre trop important de calculs. Le procédé selon l'invention adopte donc une démarche d'estimation en deux étapes.

La première étape consiste à négliger $\vec{U}$ et à considérer la relation (14) avec $\vec{U} = \vec{0}$. Le vecteur $\Delta\vec{u}_t$ est alors égal à $\alpha \cdot \vec{u}_\varphi$. On évalue C($\Theta$) en fonction de $\alpha$ sur chacune des trajectoires, en donnant aux paramètres $\theta$ et $\varphi$ des valeurs déterminées par ailleurs. Cette étape permet d'obtenir une estimation rapide du paramètre $\alpha$ et donc une première estimation $\Theta$ du vecteur $\Theta$. Cette estimation est naturellement approximative dans la mesure où le vecteur $\vec{U}$ est pris égal au vecteur $\vec{0}$, le modèle se trouvant ainsi simplifié.

Le paramètre $\theta$ et dans une moindre mesure le paramètre $\varphi$, peuvent être estimés à partir des mesures effectuées par la petite base. Le paramètre $\theta$ est d'ailleurs considéré comme déterminé de cette façon avec une précision suffisante pour permettre de mener à bien l'estimation des autres paramètres.
Ainsi, $\theta$ étant considéré comme connu, le vecteur de paramètres se simplifie encore avantageusement :

$$\Theta = \left[ \varphi, \frac{d_0}{d}, \frac{\tau_0 v_\varphi}{d} \right] \qquad (16)$$

Cette étape d'estimation met à profit les deux séries indépendantes de mesures obtenues lors des deux séquences de l'étape d'acquisition.

Sur chacun des intervalles $I_1$ et $I_2$ le modèle (8) peut s'écrire :

$$(17) \begin{cases} \Delta \Phi_t^{SMBI} = M_{\Theta,t}^{SMBI,i} + w(t) & (18) \\ \Delta^2 \Phi_t^{LBI} = M_{\Theta,t}^{LBI,i} + w'(t) - w'(t_i) & (19) \end{cases}$$

avec :

$$- \ i \in \{1, 2\}$$

$$- \ \Delta \Phi_{i,t}^{SMBI} = \vec{u}_{\varphi i} \cdot \vec{\gamma}_{mes}(t)$$

$$- M_{\Theta,t}^{SMBI,i} = \vec{u}_{\varphi_i} \cdot \frac{\vec{u}_i + \Delta \vec{u}_t^i}{\left\| \vec{u}_i + \Delta \vec{u}_t^i \right\|}$$

$$- M_{\Theta,t}^{LBI,i} = 2\pi \left\{ \vec{k}_t \cdot \frac{\vec{u}_i + \Delta \vec{u}_t^i}{\left\| \vec{u}_i + \Delta \vec{u}_t^i \right\|} - \vec{k}_i \cdot \vec{u}_i \right\}$$

$O(t_i)$ étant le milieu de la grande base à $t_i$ et $\vec{u}_i$, $\varphi_i$, $d_i$ étant respectivement la direction, le gisement et la distance de la cible par rapport à ce point.

On peut également écrire :

$$\Delta \vec{u}_t^i = \left( \frac{v_{\varphi_i}}{d_i}(t - t_i) - \frac{\Delta M_t^{\varphi_i}}{d_i} \right) \cdot \vec{u}_{\varphi_i} = \left( \frac{v_{\varphi_i} - v_i}{d_i}(t - t_i) \right) \cdot \vec{u}_{\varphi_i} \qquad (20)$$

Où $v_i$ est la composante de la vitesse du porteur suivant $u_{\gamma ii}$.

$\Delta \vec{u}_t^i$ étant exprimé selon la relation 20, le modèle 17 apparaît avantageusement comme étant simplement fonction de deux termes variables $\alpha_i$ et $\varphi_i$ :

- $\quad$ - $\alpha_i = \dfrac{\tau_0 (v_{\varphi_i} - v_i)}{d_i}$ qui caractérise le défilement relatif de la cible devant le porteur,

- $\quad \varphi_i$ qui est la valeur du gisement.

L'estimation des paramètres cible se réduit alors à une opération monodimensionnelle suivant $\vec{u}_\varphi$.

On considère par ailleurs que pendant toute la durée des mesures les paramètres relatifs à la cible n'évoluent pas significativement. On peut donc écrire :

$$\varphi_1 \approx \varphi_2 \approx \varphi, \, d_1 \approx d_2 \approx d \, et \, v_{\varphi_1} \approx v_{\varphi_2} \approx v_\varphi.$$

On obtient ainsi, en exploitant les deux séquences de mesures, les deux termes suivants :

$$(20)\begin{cases} \alpha_1 = \dfrac{\tau_0(v_\varphi - v_1)}{d} = \dfrac{\tau_0 v_\varphi}{d} - \dfrac{\tau_0 v_1}{d_0}\dfrac{d_0}{d} \\[3mm] \alpha_2 = \dfrac{\tau_0(v_\varphi - v_2)}{d} = \dfrac{\tau_0 v_\varphi}{d} - \dfrac{\tau_0 v_2}{d_0}\dfrac{d_0}{d} \end{cases}$$

La première étape consiste à établir une première estimation des paramètres recherchés.

Une première estimation $\hat{\varphi}_i$ de $\varphi_i$ est obtenue à partir des mesures de la petite base.

Des estimations $\hat{\alpha}_1$ et $\hat{\alpha}_2$ des paramètres $\alpha_1$ et $\alpha_2$ sont obtenues indépendamment par recherche de la valeur minimum du critère C($\Theta$) pour chaque instant t de mesure.

Pour l'estimation $\hat{\alpha}_1$ de $\alpha_1$, on prendra par exemple les mesures de la séquence qui se déroule durant l'intervalle de temps $I_1$.

De même pour l'estimation $\hat{\alpha}_2$ de $\alpha_2$, on prendra les mesures de la séquence qui se déroule durant l'intervalle de temps $I_2$.

La détermination des deux estimations $\hat{\alpha}_1$ et $\hat{\alpha}_2$ permet alors d'obtenir un système linéaire de deux équations à deux inconnues :

$$(21)\begin{cases} \hat{\alpha}_1 = \dfrac{\tau_0 v_\varphi}{d} - \dfrac{\tau_0 v_1}{d_0}\dfrac{d_0}{d} & (22) \\[4mm] \hat{\alpha}_2 = \dfrac{\tau_0 v_\varphi}{d} - \dfrac{\tau_0 v_2}{d_0}\dfrac{d_0}{d} & (23) \end{cases}$$

Avec $\dfrac{\tau_0 v_\varphi}{d}$ et $\dfrac{d_0}{d}$ comme inconnues.

Les valeurs $\hat{\alpha}_1$ et $v_1$ d'une part et $\hat{\alpha}_2$ et $v_2$ d'autre part, sont issues des deux séquences de mesures effectuées suivant des trajectoires différentes. Les équations 22 et 23 sont donc deux équations indépendantes.

Les estimations de $\dfrac{\tau_0 v_\varphi}{d}$ et $\dfrac{d_0}{d}$ sont alors obtenues par résolution du système (21).

Lors de la première étape d'estimation, on peut par exemple effectuer :

Une exploration des valeurs de $\varphi_i$ autour de la mesure $\hat{\varphi}_i$ fournie par la petite base avec une précision de $\pm 1°$. Cette exploration est faite par pas de 0.1°.

Une exploration des valeurs de $\alpha_i$ autour de zéro sur une centaine de valeurs comprises dans l'intervalle [-2, +2], sachant que les paramètres $\dfrac{\tau_0 v_\varphi}{d}$ et $\dfrac{d_0}{d}$ ont des valeurs proche de 1.

Avantageusement, les solutions de ce système représentent une très bonne approximation des paramètres recherchés.

A l'issue de cette première étape, qui peut être considérée comme suffisante, on dispose donc d'une très bonne estimation des composantes du vecteur $\Theta$ :

- Le site $\theta$ est déterminé, avec une précision suffisante, par les mesures de la petite base SMBI,

- Le gisement $\varphi$, également déterminé par les mesures de la petite base, est affiné lors de la recherche de minimisation du critère $C(\Theta)$,

- Les paramètres $\dfrac{\tau_0 v_\varphi}{d}$ *et* $\dfrac{d_0}{d}$ sont tirés par calcul des estimations $\hat{\alpha}_1$ *et* $\hat{\alpha}_2$.

Cette première étape qui vient d'être décrite, peut être suivie d'une deuxième étape qui permet d'affiner encore l'estimation des paramètres cible notamment en ce qui concerne le gisement $\varphi$.

La deuxième étape consiste à répéter l'opération précédente en considérant la relation (14) en totalité. Le vecteur $\Delta \vec{u}_t$ est alors égal à $\alpha \cdot \vec{u}_\varphi + \vec{U}$. On évalue ainsi $C(\Theta)$ en fonction de la totalité des paramètres initiaux, mais uniquement dans un voisinage restreint de $\Theta$, ce qui nécessite un nombre raisonnable de calculs. Ce voisinage se situe autour des valeurs estimées lors de la première étape.

Durant cette deuxième étape, la détermination des valeurs qui minimisent $C(\Theta)$ est faite directement en fonction de $\varphi$, $\dfrac{\tau_0 v_\varphi}{d}$ *et* $\dfrac{d_0}{d}$ en donnant toujours au paramètre $\theta$ sa valeur déterminée par ailleurs. Cette détermination prend également en compte les résultats de mesures qui ne l'ont pas été au cours de l'étape précédente, comme c'est le cas notamment pour les mesures réalisées dans les portions non rectilignes de la trajectoire au voisinage de $t_0$.

Lors de la deuxième étape d'estimation, on peut par exemple effectuer :

- une exploration des valeurs de $\varphi$ par pas de $0.05°$ autour de la valeur $\hat{\varphi}$ obtenue par la première étape,

- une exploration des paramètres $\dfrac{\tau_0 v_\varphi}{d}$ *et* $\dfrac{d_0}{d}$ avec de l'ordre d'une dizaine de valeurs prises autour de $\left( \dfrac{\tau_0 v_\varphi}{d} \right)$ *et* $\left( \dfrac{d_0}{d} \right)$ préalablement estimées.

Dans cette étape on peut également considérer le vecteur $\Delta \vec{u}_t$ dans son expression complète, le vecteur $\vec{U}$ n'étant plus constant. Le vecteur $\Delta \vec{u}_t$ s'écrit alors :

$$\Delta \vec{u}_t = \left( \frac{v_\varphi - v_p^\varphi}{d} \cdot (t - t_0) \right) \cdot \vec{u}_\varphi + \left( \frac{v_\theta - v_p^\theta}{d} \cdot (t - t_0) \right) \cdot \vec{u}_\theta + \left( \frac{v_r - v_p^r}{d} \cdot (t - t_0) \right) \cdot \vec{u}_0$$

$v_\theta$, $v_r$, $v_p^\theta$, *et* $v_p^r$ étant les composantes respectives des vitesses cible et porteur suivant $\vec{u}_\theta, \vec{u}_\varphi$.

L'utilisation de l'expression complète de $\Delta \vec{u}_t$ permet d'obtenir une estimation des valeurs $v_\theta$ *et* $v_r$ en partant des valeurs fixées a priori.

Dans la description du procédé selon l'invention qui vient d'être faite, l'étape d'acquisition de mesures à été décrite pour faciliter la compréhension, avec deux séquences de mesures. Ce nombre n'est bien entendu pas limitatif et le procédé peut être envisagé avec un nombre supérieur de séquences. Néanmoins il doit comporter au moins deux séquences telle que décrites pour permettre l'obtention de deux équations indépendantes.

De même, la description mentionne l'avantage du changement de repère qui a pour résultat de simplifier l'expression du modèle en fonction des paramètres recherchés. Cette description ne présente évidemment pas la totalité des moyens permettant de simplifier l'expression du modèle en fonction de ces paramètres. Le but de cette simplification étant d'obtenir, en utilisant les mesures effectuées, un nombre d'équations indépendantes suffisant pour déterminer les paramètres recherchés, toute solution conduisant à ce résultat peut être intégrée au procédé. De même l'utilisation d'un critère de vraisemblance autre que celui présenté, peut être envisagée.

La description du procédé selon l'invention a été faite dans ce qui précède, pour le cas particulier d'une localisation air-air où le signal émis par la cible est un signal en bande étroite. Ce procédé est bien sûr généralisable à d'autre cas, et notamment, par exemple, au cas d'un signal agile en fréquence.

Dans ce cas la variation de la fréquence d'émission ne s'effectue plus en bande étroite. Néanmoins, le procédé selon l'invention reste avantageusement applicable. Seule change l'expression du modèle d'évolution de la différence de phase mesurée sur la grande base. Dans ce cas l'expression (8) est modifiée comme suit:

$$(24) \begin{cases} \Delta\Phi^{SMBI}(t) = M_\Theta^{SMBI}(t) + w(t) & (12) \\ \Delta^2\Phi^{LBI} = M_\Theta^{LBI}(t) + \Delta\varphi(f_t, f_{t_0}) + w'(t) - w'(t_0) & (25) \end{cases}$$

avec :

$$\Delta\varphi(f_t, f_{t_0}) = \delta\varphi(f_t) - \delta\varphi(f_{t_0}) \qquad (26)$$

Dans l'expression (26), le terme $\Delta\varphi(f_t, f_{t0})$ représente la variation de la valeur du déphasage, lié aux deux capteurs de la grande base, entre l'instant t considéré et l'instant $t_0$ de référence. Cette variation du déphasage est directement due à la variation de la fréquence du signal émis par la cible.

Le terme $\delta\varphi(f_t)$ entrant dans l'expression de $\overline{\Delta\Phi_t^{LBI}}$ n'est donc plus supposé constant.

Cette modification du modèle porte sur un terme qui n'est pas fonction des paramètres recherchés. Elle est donc sans incidence sur le principe d'estimation. Il est d'ailleurs possible, en procédant à des mesures préalables de calibration, d'estimer pour chaque instant t la valeur de la fréquence centrale du signal. Celle-ci peut alors être mémorisée dans une table et être utilisée par la suite dans le calcul de la valeur correspondante de $\Delta\varphi(f_t, f_{t0})$.

Dans certains cas la variation de la fréquence d'émission se fait dans une plage vraiment très vaste. Ceci se produit notamment pour une émission par sauts de fréquence. Dans ce cas le signal émis ne peut plus être assimilé à un signal à bande étroite. Cependant il est possible d'analyser le signal reçu au travers d'un certain nombre de filtres dont les bandes passantes sont juxtaposées. La bande passante totale du signal est alors par exemple découpée en bandes de fréquences étroites, ce qui permet l'utilisation tel quel du procédé selon l'invention.

Un autre cas d'application du procédé, donné comme exemple, est la localisation air-sol. Dans ce cas particulier la cible est par exemple un radar terrestre fixe. Le déplacement de la cible est alors nul et par conséquent on a $v_\varphi$ = 0. Le seul paramètre restant, qui ne soit pas directement accessible au travers des mesures des déphasages, est la distance d. Le procédé selon l'invention se simplifie alors notablement. L'estimation d'un seul paramètre ne nécessitant qu'une série de mesures, il n'y a plus nécessité pour l'avion porteur de changer de trajectoire.

Dans ce cas, le système de coordonnées sphériques adopté dans le procédé s'avère particulièrement adapté.

## Revendications

1. Procédé de localisation passive d'une cible émettant un signal, **caractérisé en ce que**, le signal émis par la cible faisant l'objet d'une acquisition par des capteurs portés par un aéronef porteur, deux capteurs étant disposés selon l'axe du porteur (25) distants l'un de l'autre de façon à former une grande base interférométrique et d'autre capteurs étant disposés de part et d'autre de cet axe, et agencés de façon à former une petite base interférométrique, l'acquisition des mesures étant réalisée en au moins deux séquences indépendantes, chaque séquence étant réalisée selon une trajectoire distincte, les trajectoires (31 et 32) faisant entre elles un angle non nul, ce procédé comporte au moins deux étapes:

   - Une étape d'exploitation des mesures, pour déterminer la différence de phase $\Delta\Phi^{LBI}(t)$ des signaux reçus par les capteurs de la grande base interférométrique et pour déterminer la direction $\gamma(t)$ d'arrivée, en site et gisement, du signal émis par la cible à partir des signaux reçus par les capteurs de la petite base interférométrique;

- une étape de traitement des informations $\Delta\Phi^{LBI}(t)$ et $\gamma(t)$ pour déterminer les grandeurs $\vec{u}_0$, $\dfrac{1}{d}$, et $\dfrac{\vec{v}_c}{d}$ caractérisant la cible, le vecteur $\vec{u}_0$, représentant la direction de la cible par rapport au centre de la grande base interférométrique, d la distance séparant la cible du centre O de la grande base interférométrique à l'instant $t_0$ et $\vec{v}_c$ le vecteur vitesse de la cible;

le traitement des informations $\Delta\Phi^{LBI}(t)$ et $\gamma(t)$ consistant à résoudre le système d'équation:

$$\begin{cases} \vec{\gamma}_{mes}(t) = \dfrac{\vec{u}_0 + \Delta\vec{u}_t}{\|\vec{u}_0 + \Delta\vec{u}_t\|} + \vec{w}(t) \\[4mm] \Delta^2\Phi^{LBI}(t) = 2\pi\left\{\vec{k}_t \cdot \dfrac{\vec{u}_0 + \Delta\vec{u}_t}{\|\vec{u}_0 + \Delta\vec{u}_t\|} - \vec{k}_0 \cdot \vec{u}_0\right\} + w'(t) - w'(t_0) \quad \text{modulo } 2\pi \end{cases}$$

Dans lequel:

- $\Delta\vec{u}_t$ représente la variation au cours du temps, de la direction de la cible par rapport au centre de la grande base. Il s'exprime par la relation suivante :

$$\Delta\vec{u}_t = \frac{\vec{v}_c}{d} \cdot (t - t_0) - \frac{\Delta\vec{M}_t}{d}$$

avec :

- $\Delta\vec{M}_t = \overrightarrow{O(t_0)O(t)}$, le vecteur qui correspond au déplacement du porteur pendant l'intervalle de temps $[t_0, t]$, et

- $\vec{k}_t = \dfrac{\overrightarrow{IJ(t)}}{\lambda_t}$ caractérise la position des deux capteurs I et J de la grande base interférométrique; avec $\vec{k}_0 = \dfrac{\overrightarrow{IJ(t_0)}}{\lambda_t}$, $\lambda_c$ étant la longueur d'onde correspondant à la fréquence centrale $f_t$ du signal émis par la cible; les termes $\vec{w}(t)$ et $w'(t)$ représentant des bruits blancs gaussiens.

2. Procédé selon la revendication 1 **caractérisé en ce que** l'une des séquences de l'étape d'acquisition est réalisée selon une trajectoire suivant une direction $\vec{u}_\varphi$ sensiblement perpendiculaire à la direction moyenne de propagation estimée du signal émis par la cible pour t= $t_0$.

3. Procédé selon l'une des revendications 1 ou 2, **caractérisé en ce que** l'étape du traitement des informations $\Delta\Phi^{LBI}(t)$ et $\gamma(t)$ est réalisée en utilisant un repère de coordonnées sphériques $\{\vec{u}_0, \vec{u}_\theta, \vec{u}_\varphi\}$ (42) dans lequel:

   - $\vec{u}_0$ représente, pour $t = t_0$, la direction de la cible par rapport au centre de la grande base interférométrique,
   - $\vec{u}_\varphi$ représente la direction de la trajectoire (31) du porteur (11),

   - $\vec{u}_\theta$ représente la direction perpendculaire à $\vec{u}_0$ et $\vec{u}_\varphi$, les grandeurs $\vec{u}_0$, $\dfrac{1}{d}$, et $\dfrac{\vec{v}_c}{d}$ étant alors définies par

un vecteur $\Theta$ à six d d composantes ayant pour expression:

$$\Theta = \left[ \theta, \varphi, \frac{d_0}{d}, \frac{\tau_0 v_r}{d}, \frac{\tau_0 v_\theta}{d}, \frac{\tau_0 v_\varphi}{d} \right]$$

- $v_r$, $v_\theta$ et $v_\varphi$ étant les composantes de la vitesse cible $\vec{v}_c$, dans Le repère de coordonnées sphériques;

- do et $\tau_0$ étant des constantes permettant d'exprimer $\dfrac{1}{d}, \dfrac{v_r}{d}, \dfrac{v_\theta}{d}$ et $\dfrac{v_\varphi}{d}$

comme des nombres sans dimension de l'ordre de l'unité;
le système d'équations à résoudre pouvant alors être exprimé sous la forme:

$$\begin{cases} \Delta\Phi^{SMBI}(t) = M_\Theta^{SMBI}(t) + w(t) \\ \Delta^2\Phi^{LBI}(t) = M_\Theta^{LBI}(t) + w'(t) - w'(t_0) \end{cases}$$

dans laquelle:

$$- \ \Delta\Phi^{SMBI}(t) = \vec{u}_\varphi \cdot \vec{\gamma}_{mes}(t)$$

$$- \ M_\Theta^{SMBI}(t) = \vec{u}_\varphi \cdot \frac{\vec{u}_0 + \Delta\vec{u}_t}{\|\vec{u}_0 + \Delta\vec{u}_t\|}$$

$$- \ M_\Theta^{LBI}(t) = 2\pi \left\{ \vec{k}_t \cdot \frac{\vec{u}_0 + \Delta\vec{u}_t}{\|\vec{u}_0 + \Delta\vec{u}_t\|} - \vec{k}_0 \cdot \vec{u}_0 \right\}$$

Avec :

$$- \ \Delta\vec{u}_t = \alpha \cdot \vec{u}_\varphi + \vec{U}$$

où

$$- \ \alpha = \frac{v_\varphi - v_p^\varphi}{d} = \frac{\tau_0 \ v_p^\varphi}{d} - \frac{\tau_0 \ v_p^\varphi}{d_0} \cdot \frac{d_0}{d}$$

et avec

$$- \vec{U} = \left( \frac{v_r}{d} \cdot (t - t_0) - \frac{v_p^{\varphi}}{d} \cdot (t - t_0) \right) \cdot \vec{u}_0 + \left( \frac{v_\theta}{d} \cdot (t - t_0) - \frac{v_p^{\varphi}}{d} \cdot (t - t_0) \right) \cdot \vec{u}_\theta$$

$v_p^{\varphi}$ étant la composante suivant $\vec{u}_\varphi$ de la vitesse du porteur; $\Delta\vec{u}_t$ représentant l'inconnue du système d'équations.

**4.** Procédé selon la revendication 3, **caractérisé en ce que**, $\alpha$ et $\vec{U}$ étant fonctions des composantes de $\Theta$, les solutions du système d'équations permettant de déterminer les caractéristiques de la cible sont obtenues en recherchant sur l'ensemble des mesures effectuées pour chaque série de mesures, les vecteurs $\Theta$ minimisent un critère statistique de vraisemblance $C(\Theta)$.

**5.** Procédé selon la revendication 4, **caractérisé en ce que** le critère $C(\Theta)$ utilisé s'exprime sous la forme suivante :

$$C(\Theta) = \frac{\sum_n ( \Delta\Phi^{SMBI} (t_n) - M_\Theta^{SMBI} (t_n))^2}{2\sigma_{SMBI}^2} -$$
$$\log \int \frac{(\Delta^2\Phi^{LBI} (t_n) - M_\Theta^{LBI} (t_n) + w_0 \, [2\pi])}{2\sigma_{LBI}^2} \exp - \frac{w_0^2}{2\sigma_{LBI}^2} \, dw_0$$

où la variable $t_n$ représente les instants de mesures pris sur les intervalles

$$\left[ t_0 - \frac{T}{2}, \; t_1 \right] \text{ et } \left[ t_2, \; t_0 + \frac{T}{2} \right].$$

**6.** Procédé selon la revendication 5, **caractérisé en ce que** l'étape de traitement des informations $\Delta\Phi^{LBI}(t)$ et $\gamma(t)$ est une étape permettant de réaliser une estimation du vecteur $\Theta$, qui consiste, en négligeant le terme $\vec{U}$ dans l'expression de $\Delta\vec{u}_t$, à:

- estimer les composantes $\theta$ et $\varphi$ du vecteur $\Theta$ au moyen des mesures effectuées par la petite base interférométrique;
- attribuer aux composantes $v_\theta$ et $v_r$ du vecteur $\Theta$ respectivement une valeur nulle et une valeur fixe déterminée a priori;
- rechercher, pour chacune des deux séries de mesures séparément, les valeurs $\alpha$ qui minimisent le critère C ($\Theta$) pour chaque instant t de mesure de façon à obtenir deux estimations $\hat{\alpha}_1$ et $\hat{\alpha}_2$ de la grandeur $\alpha$ de $\Delta\vec{u}_t$

- déterminer les composantes $\frac{\tau_0 v_\varphi}{d}$ et $\frac{d_0}{d}$ du vecteur $\Theta$ en résolvant le système d'équations suivant ainsi

obtenu:

$$\begin{cases} \hat{\alpha}_1 = \dfrac{\tau_0 v_\varphi}{d} - \dfrac{\tau_0 v_1}{d_0} \dfrac{d_0}{d} \\[3mm] \hat{\alpha}_2 = \dfrac{\tau_0 v_\varphi}{d} - \dfrac{\tau_0 v_2}{d_0} \dfrac{d_0}{d} \end{cases}$$

Dans lequel $v_1$ et $v_2$ représentent la vitesse du porteur pendant chaque séquence de mesures.

7. Procédé selon la revendication 6, **caractérisé en ce que** l'étape de traitement des informations $\Delta\Phi^{LBI}(t)$ et $\gamma(t)$ est complétée par une étape d'affinage de l'estimation du vecteur $\Theta$ réalisée, qui consiste, en prenant en compte le terme $\vec{U}$ dans l'expression de $\Delta\vec{u}_t$, à:

  - conserver l'estimation de la composantes $\theta$ déjà réalisée;

  - rechercher, pour l'ensemble des mesures les valeurs des composantes $\varphi$, $\dfrac{\tau_0 v_\varphi}{d}$ et $\dfrac{d_0}{d}$ du vecteur $\Theta$ qui minimisent $C(\Theta)$ ces valeurs étant choisie dans un voisinage restreint déterminé autour des valeurs estimées précédemment.

## Claims

1. A process for passively locating a target emitting a signal, **characterised in that** the signal emitted by the target is acquired by sensors on-board a carrier aircraft, two sensors being disposed along an axis of the carrier (25) at a distance from each other so as to form a wide interferometric base, and other sensors being disposed either side of this axis and arranged so as to form a narrow interferometric base, the acquisition of measured values being performed in at least two independent sequences, each sequence being realised along a distinct trajectory, the trajectories (31 and 32) together forming a non-zero angle, this process comprising at least two steps:

  - a step of using the measured values to determine the phase difference $\Delta\Phi^{LBI}(t)$ of the signals received by the sensors of the wide interferometric base and to determine the direction $\gamma(t)$ of arrival in elevation and in bearing, of the signal emitted by the target from the signals received by the sensors of the narrow interferometric base;

  - a step of processing information $\Delta\Phi^{LBI}(t)$ and $\gamma(t)$ in order to determine the values $u_0$, $\dfrac{1}{d}$ and $\dfrac{\bar{v}_c}{d}$ which characterise the target, the vector $\vec{u}_0$ representing the direction of the target relative to the centre of the wide interferometric base, d being the distance separating the target from the centre O of the wide interferometric base at instant $t_0$ and $\vec{v}_c$ being the speed vector of the target;

  the processing of information $\Delta\Phi^{LBI}(t)$ and $\gamma(t)$ consisting in resolving the following system of equations:

$$\begin{cases} \bar{\gamma}_{mes}(t) = \dfrac{\bar{u}_0 + \Delta\bar{u}_t}{\left\|\bar{u}_0 + \Delta\bar{u}_t\right\|} + \vec{w}(t) \\[4mm] \Delta^2\Phi^{LBI}(t) = 2\pi\left\{\bar{k}_t \cdot \dfrac{\bar{u}_0 + \Delta\bar{u}_t}{\left\|\bar{u}_0 + \Delta\bar{u}_t\right\|} - \vec{k}_0 \cdot \vec{u}_0\right\} + w'(t) - w'(t_0) \quad \text{modulo } 2\pi \end{cases}$$

wherein:
- $\Delta\vec{u}_t$ represents the variation over time of the direction of the target relative to the centre of the wide base, expressed by the following relation:

$$- \Delta\bar{u}_t = \dfrac{\bar{v}_c}{d} \cdot (t - t_0) - \dfrac{\Delta\vec{M}_t}{d}$$

with:

  - $\overrightarrow{\Delta M_t} = \overrightarrow{O(t_0)O(t)}$ being the vector which corresponds to the displacement of the carrier during time

interval [$t_0$, t], and

- $\tilde{k}_t = \dfrac{\vec{IJ(t)}}{\lambda_t}$ characterising the position of the two sensors I and J of the wide

interferometric base; with $\tilde{k}_0 = \dfrac{\vec{IJ(t_0)}}{\lambda_t}$, $\lambda_t$ being the wavelength corresponding to the central frequency $f_t$ of

the signal emitted by the target;

the terms $\vec{w}(t)$ and w'(t) representing white Gaussian noises.

2. The process according to claim 1, **characterised in that** one of the sequences of the acquisition step is performed along a trajectory following a direction $\vec{u}_\varphi$ which is essentially perpendicular to the mean estimated propagation direction of the signal emitted by the target for t =$t_0$.

3. The process according to claim 1 or 2, **characterised in that** the step of processing information $\Delta\Phi^{LBI}(t)$ and $\gamma(\vec{t})$ is performed using a system of spherical coordinates $\{\vec{u}_0, \vec{u}_\theta, \vec{u}_\varphi\}$ (42) wherein:

- $\vec{u}_0$ represents, where t = $t_0$, the direction of the target relative to the centre of the wide interferometric base,
- $\vec{u}_\varphi$ represents the direction of the trajectory (31) of the carrier (11),
- $\vec{u}_\theta$ represents the direction perpendicular to $\vec{u}_0$ and $\vec{u}_\varphi$,

the values $\vec{u}_0$, $\dfrac{1}{d}$, and $\dfrac{\vec{v}_c}{d}$ thus being defined by a vector $\theta$ with six components expressed as:

$$\Theta = \left[ \theta, \varphi, \frac{d_0}{d}, \frac{\tau_0 v_r}{d}, \frac{\tau_0 v_\theta}{d}, \frac{\tau_0 v}{d} \right]$$

- $v_r$, $v_\theta$ and $v_\varphi$ being the components of the target speed $\vec{v}_c$ in the system of spherical coordinates;

- $d_0$ and $\tau_0$ being constants permitting the expression of $\dfrac{1}{d}$, $\dfrac{v_r}{d}$, $\dfrac{v_\theta}{d}$ and $\dfrac{v_\varphi}{d}$ as numbers without dimension in the order of unity;
the system of equations to be resolved therefore may be expressed as follows:

$$\begin{cases} \Delta\Phi^{SMBI}(t) = M_\Theta^{SMBI}(t) + w(t) \\ \Delta^2\Phi^{LBI}(t) = M_\Theta^{LBI}(t) + w'(t) - w'(t_0) \end{cases}$$

wherein:

- $\Delta\Phi^{SMBI}(t) = \vec{u}_\varphi \cdot \vec{\gamma}_{mes}(t)$

- $M_\Theta^{SMBI}(t) = \vec{u}_\varphi \cdot \dfrac{\vec{u}_0 + \Delta\vec{u}_t}{\|\vec{u}_0 + \Delta\vec{u}_t\|}$

$$- M_\Theta^{LBI}(t) = 2\pi \left\{ \vec{k}_t \cdot \frac{\vec{u}_0 + \Delta \vec{u}_t}{\|\vec{u}_0 + \Delta \vec{u}_t\|} - \vec{k}_0 \cdot \vec{u}_0 \right\}$$

with:

$$- \Delta \vec{u}_t = \alpha \cdot \vec{u}_\varphi + \tilde{\vec{U}}$$

where

$$- \alpha = \frac{v - v_p^\varphi}{d} = \frac{\tau_0 \, v_p^\varphi}{d} - \frac{\tau_0 \, v_p^\varphi}{d_0} \cdot \frac{d_0}{d}$$

and with

$$\vec{U} = \left( \frac{v_r}{d} \cdot (t - t_0) - \frac{v_p^\varphi}{d} \cdot (t - t_0) \right) \cdot \vec{u}_0 + \left( \frac{v_\theta}{d} \cdot (t - t_0) - \frac{v_p^\varphi}{d} \cdot (t - t_0) \right) \cdot \vec{u}_\theta$$

$v_p^\varphi$ being the component following $\vec{u}_\varphi$ of the speed of the carrier;

$\Delta \vec{u}_t$ representing the unknown of the system of equations.

4. The process according to claim 3, **characterised in that**, with $\alpha$ and $\vec{U}$ being functions of the components of $\theta$, the solutions of the system of equations allowing the determination of the characteristics of the target are obtained by searching out of the set of measured values realised for each series of measurements, the vectors $\theta$ minimising a statistic probability criterion C ($\Theta$).

5. The process according to claim 4, **characterised in that** the criterion C ($\Theta$) used is expressed as follows:

$$C(\Theta) = \frac{\sum_n (\Delta\Phi^{SMBI}(t_n) - M_\Theta^{SMBI}(t_n))^2}{2\sigma_{SMBI}^2} - \\ \log \int \frac{(\Delta^2\Phi^{LBI}(t_n) - M_\Theta^{LBI}(t_n) + w_0 \, [2\pi])}{2\sigma_{LBI}^2} \exp - \frac{w_0^2}{2\sigma_{LBI}^2} \, dw_0$$

where the variable $t_n$ represents the instants of measurements taken at intervals

$$\left[ t_0 - \frac{T}{2}, \, t_1 \right] \text{ and } \left[ t_2, \, t_0 + \frac{T}{2} \right].$$

6. The process according to claim 5, **characterised in that** the step of processing information $\Delta\Phi^{LBI}(t)$ and $\gamma(t)$ is a step which allows the completion of an estimate of the vector $\Theta$, which consists, ignoring the term $\vec{U}$ in the expression $\Delta \vec{u}_t$, in:

- estimating the components θ and φ of the vector Θ using the measured values realised by the narrow interferometric base;
- assigning a zero value and a fixed predetermined value to the components $v_\theta$ and $v_r$ respectively of the vector Θ;
- finding, for each of the two series of measurements separately, the values α which minimise the criterion C (Θ) for each instant t of measurement so as to obtain two estimates $\hat{\alpha}_1$ and $\hat{\alpha}_2$ of the value α of $\Delta\vec{u}_t$,

- determining the components $\dfrac{\tau_0 v}{d}$ and $\dfrac{d_0}{d}$ of the vector θ by resolving the following system of equations obtained thus:

$$\begin{cases} \hat{\alpha}_1 = \dfrac{\tau_0 v_\varphi}{d} - \dfrac{\tau_0 v_1}{d_0}\,\dfrac{d_0}{d} \\[3ex] \hat{\alpha}_2 = \dfrac{\tau_0 v_\varphi}{d} - \dfrac{\tau_0 v_2}{d_0}\,\dfrac{d_0}{d} \end{cases}$$

wherein $v_1$ and $v_2$ represent the speed of the carrier during each measurement sequence.

**7.** The process according to claim 6, **characterised in that** the step of processing information $\Delta\Phi^{LBI}(t)$ and $\gamma(\vec{t})$ is completed by a step of refining the completed estimate of the vector Θ, which consists, including the term $\vec{U}$ in the expression of $\Delta\vec{u}_t$, in:

- conserving the estimate of the already completed components θ;

- finding, for all of the measurements, the values of the components φ, $\dfrac{\tau_0 v_\varphi}{d}$ and $\dfrac{d_0}{d}$ of the vector θ which minimise C(Θ), these values being selected in a d d restricted vicinity determined around the previously estimated values.

**Patentansprüche**

**1.** Verfahren zum passiven Orten eines ein Signal emittierenden Ziels, **dadurch gekennzeichnet, dass** das von dem Ziel emittierte Signal von Sensoren an Bord eines Trägerluftfahrzeugs erfasst wird, wobei zwei Sensoren entlang einer Achse des Trägers (25) entfernt voneinander so angeordnet sind, dass sie eine breite interferometrische Basis bilden, und wobei andere Sensoren auf beiden Seiten dieser Achse so angeordnet sind, dass sie eine schmale interferometrische Basis bilden, wobei die Messwerterfassung in wenigstens zwei unabhängigen Sequenzen erfolgt, wobei jede Sequenz über eine separate Bahn durchgeführt wird, wobei die Bahnen (31 und 32) einen Winkel von ungleich null miteinander bilden, wobei das Verfahren wenigstens zwei Schritte beinhaltet:

- einen Schritt des Nutzens der Messwerte zum Ermitteln der Phasendifferenz $\Delta\Phi^{LBI}(t)$ der von den Sensoren der breiten interferometischen Basis empfangenen Signale und zum Ermitteln der Ankunftsrichtung $\gamma(\vec{t})$, nach Ort und Lage, des von dem Ziel emittierten Signals von den von den Sensoren der schmalen interferometrischen Basis empfangenen Signale;

- einen Schritt des Verarbeitens der Informationen $\Delta\Phi^{LBI}(t)$ und $\gamma(\vec{t})$, um die Werte $\vec{u}_0$, $\dfrac{1}{d}$ und $\dfrac{\vec{v}_c}{d}$ zu ermitteln, die das Ziel charakterisieren, wobei der Vektor $\vec{u}_0$ die Richtung des Ziels relativ zur Mitte der breiten interferometrischen Basis repräsentiert, wobei d die Distanz zwischen dem Ziel und dem Mittelpunkt O der breiten interferometrischen Basis zum Zeitpunkt $t_0$ und $\vec{v}_c$ der Geschwindigkeitsvektor des Ziels ist;

wobei das Verarbeiten der Information $\Delta\Phi^{LBI}(t)$ und $\gamma(\vec{t})$ im Lösen des folgenden Gleichungssystems besteht:

$$\begin{cases} \vec{\gamma}_{mes}(t) = \dfrac{\vec{u}_0 + \Delta \vec{u}_t}{\|\vec{u}_0 + \Delta \vec{u}_t\|} + \vec{w}(t) \\[2em] \Delta^2 \Phi^{LBI}(t) = 2\pi \left\{ \vec{k}_t \cdot \dfrac{\vec{u}_0 + \Delta \vec{u}_t}{\|\vec{u}_0 + \Delta \vec{u}_t\|} - \vec{k}_0 \cdot \vec{u}_0 \right\} + w'(t) - w'(t_0) \quad \text{modulo } 2\pi \end{cases}$$

wobei:

- $\Delta \vec{u}_t$ die Variation der Richtung des Ziels im Laufe der Zeit relativ zur Mitte der breiten Basis repräsentiert, ausgedrückt durch die folgende Relation:

$$- \Delta \vec{u}_t = \frac{\vec{v}_c}{d} \cdot (t - t_0) - \frac{\Delta \vec{M}_t}{d}$$

dabei ist:

- $\overrightarrow{\Delta M_t} = \overrightarrow{O(t_0)O(t)}$ der Vektor, der der Bewegung des Trägers während des Zeitintervalls $[t_0, t]$ entspricht, und

- $\vec{k}_t = \dfrac{\overrightarrow{IJ(t)}}{\lambda_t}$ entspricht der Position der beiden Sensoren I und J der breiten interferometrischen Basis; wobei

$\vec{k}_0 = \dfrac{\overrightarrow{IJ(t_0)}}{\lambda_t}$ wobei $\lambda_t$ die Wellenlänge ist, die der Mittenfrequenz $f_t$ des von dem Ziel emittierten Signals entspricht;

wobei die Terme $\vec{w}(t)$ und w'(t) Gauß'sches Weißrauschen repräsentieren.

2. Verfahren nach Anspruch 1, **dadurch gekennzeichnet, dass** eine der Sequenzen des Erfassungsschrittes über eine Bahn in einer Richtung $\vec{u}_\varphi$ erfolgt, die im Wesentlichen lotrecht zur mittleren geschätzten Ausbreitungsrichtung des von dem Ziel emittierten Signals für t = $t_0$ ist.

3. Verfahren nach Anspruch 1 oder 2, **dadurch gekennzeichnet, dass** der Schritt des Verarbeitens der Informationen $\Delta\Phi^{LBI}(t)$ und $\gamma(\vec{t})$ unter Verwendung eines Systems von sphärischen Koordinaten $\{\vec{u}_0, u_\theta, u_\varphi\}$ (42) ausgeführt wird, wobei:

- $\vec{u}_0$ dort, wo t = $t_0$ ist, die Richtung des Ziels relativ zur Mitte der breiten interferometrischen Basis repräsentiert,
- $\vec{u}_\varphi$ die Richtung der Bahn (31) des Trägers (11) repräsentiert,
- $\vec{u}_\theta$ die Richtung lotrecht zu $\vec{u}_0$ und $\vec{u}_\varphi$ repräsentiert,

wobei die so durch einen Vektor $\theta$ mit sechs Komponenten definierten Werte $\vec{u}_0$, $\dfrac{1}{d}$, und $\dfrac{\vec{v}_c}{d}$ den folgenden Ausdruck haben:

$$\Theta = \left[ \theta, \varphi, \frac{d_0}{d}, \frac{\tau_0 v_r}{d}, \frac{\tau_0 v_\theta}{d}, \frac{\tau_0 v}{d} \right]$$

- wobei $v_r$, $v_\theta$ und $v_\varphi$ die Komponenten der Zielgeschwindigkeit $\vec{v}_c$ in der Referenz von sphärischen Koordinaten sind;

- wobei $d_o$ und $\tau_o$ Konstanten sind, die das Ausdrücken von $\dfrac{1}{d}$, $\dfrac{v_r}{d}$, und $\dfrac{v_\varphi}{d}$ als Zahlen ohne Dimension der Ordnung eins gestatten;

wobei das zu lösende Gleichungssystem daher wie folgt ausgedrückt werden kann:

$$\begin{cases} \Delta\Phi^{SMBI}(t) = M_\Theta^{SMBI}(t) + w(t) \\ \Delta^2\Phi^{LBI}(t) = M_\Theta^{LBI}(t) + w'(t) - w'(t_0) \end{cases}$$

wobei:

$$- \Delta\Phi^{SMBI}(t) = \vec{u}_\varphi \cdot \vec{\gamma}_{mes}(t)$$

$$- M_\Theta^{SMBI}(t) = \vec{u}_\varphi \cdot \frac{\vec{u}_0 + \Delta\vec{u}_t}{\left\| \vec{u}_0 + \Delta\vec{u}_t \right\|}$$

$$- M_\Theta^{LBI}(t) = 2\pi \left\{ \vec{k}_t \cdot \frac{\vec{u}_0 + \Delta\vec{u}_t}{\left\| \vec{u}_0 + \Delta\vec{u}_t \right\|} - \vec{k}_0 \cdot \vec{u}_0 \right\}$$

dabei ist:

$$-. \Delta\vec{u}_t = \alpha \cdot \vec{u}_\varphi + \vec{U}$$

wobei

$$- \alpha = \frac{v - v_p^\varphi}{d} = \frac{\tau_0 \, v_p^\varphi}{d} - \frac{\tau_0 \, v_p^\varphi}{d_0} \cdot \frac{d_0}{d}$$

und dabei ist:

$$- \vec{U} = \left( \frac{v_r}{d} \cdot (t - t_0) - \frac{v_p^\varphi}{d} \cdot (t - t_0) \right) \cdot \vec{u}_0 + \left( \frac{v_\theta}{d} \cdot (t - t_0) - \frac{v_p^\varphi}{d} \cdot (t - t_0) \right) \cdot \vec{u}_\theta$$

Wobei $v_p^\varphi$ die auf $\vec{u}_\varphi$ folgende Komponente der Geschwindigkeit des Trägers ist;

wobei $\Delta\vec{u}_t$ die Unbekannte des Gleichungssystems repräsentiert.

4. Verfahren nach Anspruch 3, **dadurch gekennzeichnet, dass**, da $\alpha$ und $\vec{U}$ Funktionen der Komponenten von $\theta$ sind, die Lösungen des Gleichungssystems, mit dem die Kennwerte des Ziels ermittelt werden können, durch Absuchen aller für jede Messreihe realisierten Messwerte nach den Vektoren $\theta$, die ein statistisches Wahrscheinlichkeitskriterium C ($\Theta$) minimieren, erhalten werden.

5. Verfahren nach Anspruch 4, **dadurch gekennzeichnet, dass** das verwendete Kriterium C ($\Theta$) wie folgt ausgedrückt wird:

$$C(\Theta) \; = \; \frac{\sum_n (\Delta\Phi^{SMBI}(t_n) - M_\Theta^{SMBI}(t_n))^2}{2\sigma_{SMBI}^2} -$$

$$\log \int \frac{(\Delta^2\Phi^{LBI}(t_n) - M_\Theta^{LBI}(t_n) + w_0\,[2\pi])}{2\sigma_{LBI}^2} \exp- \frac{w_0^2}{2\sigma_{LBI}^2}\,dw_0$$

wobei die Variable $t_n$ die Zeitpunkte von Messungen repräsentiert, die in den Intervallen $\left[ t_0 - \dfrac{T}{2},\ t_1 \right]$ und $\left[ t_2,\ t_0 + \dfrac{T}{2} \right]$ durchgeführt wurden.

6. Verfahren nach Anspruch 5, **dadurch gekennzeichnet, dass** der Schritt des Verarbeitens von Informationen $\Delta\Phi^{LBI}$ (t) und $\gamma(t)$ ein Schritt ist, der das Vornehmen einer Schätzung des Vektors $\Theta$ zulässt, der aus Folgendem besteht, unter Ignorierung des Term $\vec{U}$ in dem Ausdruck $\Delta\vec{u_t}$ :

- Schätzen der Komponenten $\theta$ und $\varphi$ des Vektors $\theta$ anhand der durch die schmale interferometrische Basis realisierten Messwerte;
- Zuordnen eines Nullwertes und eines festen vorbestimmten Wertes jeweils zu den Komponenten $v_\theta$ und $v_r$ des Vektors $\Theta$;
- Suchen, für jede der beiden Messreihen separat, der Werte $\alpha$, die das Kriterium C($\Theta$) für jeden Messzeitpunkt t minimieren, um zwei Schätzungen $\hat{\alpha}_1$ und $\hat{\alpha}_2$ des Wertes $\alpha$ von $\Delta\vec{u_t}$ zu erhalten,

- Ermitteln der Komponenten $\dfrac{\tau_0 v}{d}$ und $\dfrac{d_0}{d}$ des Vektors $\theta$ durch Lösen des folgenden Gleichungssystems, das wie folgt erhalten wurde:

$$\begin{cases} \hat{\alpha}_1 \; = \dfrac{\tau_0 v_\varphi}{d} - \dfrac{\tau_0 v_1}{d_0}\,\dfrac{d_0}{d} \\[4mm] \hat{\alpha}_2 = \dfrac{\tau_0 v_\varphi}{d} - \dfrac{\tau_0 v_2}{d_0}\,\dfrac{d_0}{d} \end{cases}$$

wobei $v_1$ und $v_2$ die Geschwindigkeit des Trägers bei jeder Messsequenz repräsentieren.

7. Verfahren nach Anspruch 6, **dadurch gekennzeichnet, dass** der Schritt des Verarbeitens der Informationen $\Delta\Phi^{LBI}$ (t) und $\gamma(t)$ durch einen Schritt des Verfeinerns der realisierten Schätzung des Vektors $\Theta$ vervollständigt wird, der aus Folgendem besteht, unter Einbeziehung des Terms $\vec{U}$ in dem Ausdruck $\Delta\vec{u_t}$ :

- Konservieren der bereits vollzogenen Schätzung der Komponente $\theta$;

- Suchen, für den Messwertsatz, der Werte der Komponenten $\varphi$, $\dfrac{\tau_0 v_\varphi}{d}$ und $\dfrac{d_0}{d}$ des Vektors $\theta$, die $C(\Theta)$ minimieren, wobei diese Werte in einer eingeschränkten Nachbarschaft ausgewählt werden, die um die zuvor geschätzten Werte herum ermittelt werden.

Fig. 1

Fig. 2

Fig. 3

Fig. 4

**EP 1 324 065 B1**

**Documents brevets cités dans la description**

- US 6163927 A